# EUROPÄISCHE PATENTSCHRIFT

(11) **EP 0 401 492 B1**
(45) Veröffentlichungstag und Bekanntmachung des Hinweises auf die Patenterteilung: **23.03.1994**
(21) Anmeldenummer: 90106885.8
(22) Anmeldetag: 10.04.1990
(51) Int. Cl.: D21G 1/02, F16C 13/00

(54) **Walze mit Biegungsausgleich**
Controlled deflection roller
Rouleau à compensation de flexion

(30) Priorität: 06.06.1989 DE 3918413
(43) Veröffentlichungstag der Anmeldung: 12.12.1990
(73) Patentinhaber: J.M. Voith GmbH, D-89522 Heidenheim (DE)
(72) Erfinder: Sollinger, Hans-Peter, Dr., D-7920 Heidenheim (DE); Madrzak, Zygmunt, D-7920 Heidenheim (DE)
(74) Vertreter: Weitzel, Wolfgang, Dr.-Ing.

(56) Entgegenhaltungen:
- CH-A- 500 317
- DE-A- 1 761 641
- FR-A- 2 337 279

## Beschreibung

Die Erfindung betrifft eine Walze entsprechend dem Oberbegriff des Patentanspruchs 1. Eine solche Walze ist bekannt aus der deutschen Offenlegungsschrift 17 61 641. Bei dieser Walze befinden sich in axialer Richtung betrachtet abschnittsweise permanente Magnete sowohl am Innenumfang eines Walzenmantels als auch am Außenumfang eines Kernträgers. Dabei sind die Magnete jeweils gleichmäßig über dem Umfang verteilt. Dabei stehen sich auf der oberen Hälfte des Umfanges ungleichnamige und auf der unteren Hälfte gleichnamige Pole jeweils gegenüber. Eine Steuerung der aufeinander wirkenden Felder erfolgt durch eine Axialverschiebung der Polträger auf den Kernträger. Diese Konstruktion soll eine Presswalze darstellen, die entweder in Papierentwässerungseinrichtungen oder in sogenannten Kalandern Verwendung finden kann.

Gemäß der CH-A 500317 soll eine Verspannung der den Magnet tragenden Walzenachse durch eine Zugstange erfolgen, wobei naturgemäß eine - in der Schrift zwar nicht beschriebene, aber sehr notwendige - sehr steife Rahmenkonstruktion dieser Verspannung der Achse in axialer Richtung ermöglichen muß. Zusätzlich wird eine Verstellung des Spaltes zwischen dem Magnetkern und dem Walzenmantel mittels Zugstangen bewirkt. Diese Einrichtung dürfte sehr schwer in der Praxis umsetzbar sein und ist insgesamt wohl doch sehr aufwendig.

Die Aufgabe der Erfindung ist es, bei sehr langen Walzen, die im wesentlichen nicht an den Enden stark belastet sind, eine einfache Montierbarkeit der Walze bei einfachem Aufbau aber mit höchstem Wirkungsgrad zu erreichen.

Diese Aufgabe wird erfindungsgemäß bei einer Walze der eingangs genannten Art durch die Merkmale des kennzeichnenden Teils des Patentanspruchs 1 gelöst.

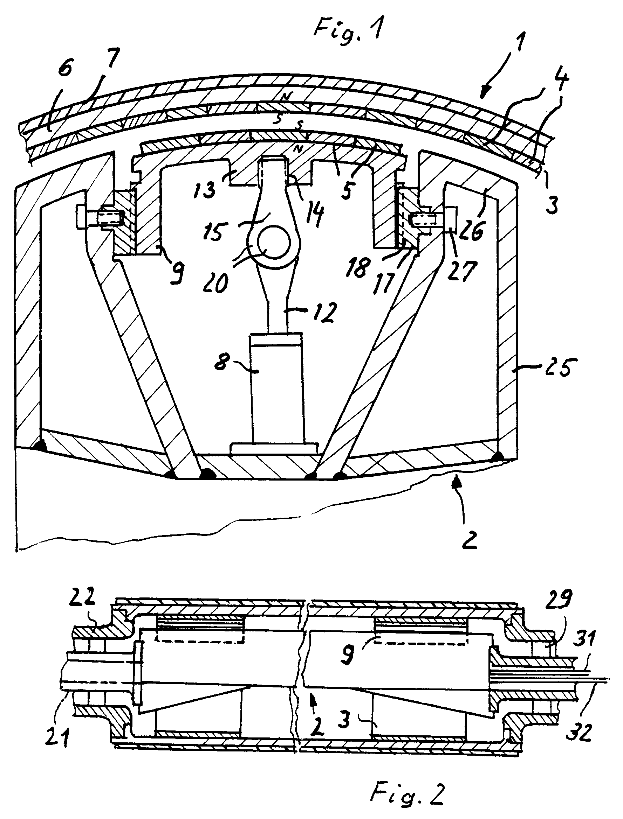

Nachfolgend wird die Erfindung anhand einer in den Figuren der Zeichnung dargestellten Zeichnung erläutert, wobei die Fig. 1 im wesentlichen einen Querschnitt durch einen Pol einschließlich Kernträger und Walzenmantel und Fig. 2 prinzipmäßig einen Axialschnitt durch die Walze darstellt.

Der Walzenmantel 1 weist einen Aufbau in drei Schichten auf, wobei ein tragender Hohlzylinder 6 aus Stahl vorgesehen ist, der außen eine Beschichtung 7 aus Gummi und innen an den Stellen an dem Kernträger 2 gelagerten Polträgern mit Gegenmagneten 5 eine magnetische Schicht 3 aufweist. Diese Schicht 3 besteht vorzugsweise aus einzelnen Magnetplättchen 4. Dabei ist jeweils der eine Pol radial nach innen und der andere Pol radial nach außen gerichtet, so daß sich eine radiale Magnetisierung (hier mit den Polen N, S gekennzeichnet) der Magnetschicht 3 ergibt. Die Magnete 5 des Polträgers 9 sind ebensolche Magnetplättchen, die so angeordnet sind, daß sich ungleichnamige Pole von Polträger 9 und Walzenmantel 1 gegenüberliegen. Der Polträger 9 weist einen Ansatz 13 mit Gewindebohrung auf, mittels welcher Druckstück 15 mit dem Polträger 9 verbunden ist. Über ein Gelenk 20 ist das Druckstück 15 mit der Kolbenstange 12 eines hydraulischen oder pneumatischen Stellmotors 8 verbunden. Der Polträger 9 ist in dem Kernträger 2 mittels einem mit letzterem über Schrauben 27 verbundenen Gleitstück 17 über eine Gleitführung 18 im wesentlichen radial verschieblich gelagert.

Der Kernträger 2 ist hier aus zeichnerischen Gründen relativ klein dargestellt, jedoch könnten die Wände 25 und 26 zueinander fluchtend im Form eines Hohlzylinders ausgebildet sein, um eine große Festigkeit des Kernträgers zu erreichen. Dieser Hohlzylinder hätte dann praktisch nur an den Stellen der Polträger zur Aufnahme derselben Aussparungen.

Es werden Magnete verwendet, die äußerst große Feldstärken ermöglichen, wobei die Energiedichte aus B x H maximal über 300 kJ/m³ beträgt. Die Temperaturfestigkeit reicht bis etwa 120°C bis 150°C.

Die Polträger 9 werden etwa spiegelsymmetrisch entlang der Achse der Hohlwalze 1 angeordnet, wie aus Fig. 2 zu ersehen ist.

Da die Gegenmagnete 5 nur auf einer Seite des Kernträgers angeordnet sind, ist eine leichte Montage bei sehr langen Walzen möglich, zumal ja der Polträger 9 bei der Montage radial nach innen im Bezug auf den Walzenmantel 1 zurückgefahren wird. In Betrieb wird ein Luftspalt von etwa höchstens 2 mm in Bezug auf die Magnetschicht 3 der Hohlwalze 1 eingestellt. Durch die hydraulische oder pneumatische Druckbeaufschlagung der Polträger 9 mittels der Stellmotoren 8 ist eine genaue kräftemäßige Einstellbarkeit hinsichtlich des Biegungsausgleichs der Hohlwalze 1 gegeben. Man kann dazu im Normalfall alle Stellmotoren 8 mit dem gleichen Druck beaufschlagen. Man erhält somit eine gleichmäßige Streckenbelastung, die der Durchbiegung der Gegenwalze, mit der die Hohlwalze 1 zusammenarbeitet entspricht. Die Durchbiegung der Gegenwalze erfolgt in diesem Anwendugsfall durch die Schwerkraft allein. Die Anwendung soll hauptsächlich für Auftragswalzen in Streicheinrichtungen erfolgen, wobei die Hohlwalze 1 in einem Sumpf aus Streichmasse eintaucht. Es ist erkannt worden, daß die Auftriebskräfte der Hohlwalze 1 durch die verschiedenen Streichmassen recht unterschiedlich sind, so daß eine Bombierung der zusammenarbeitenden Walzen (Hohlwalze 1 = Auftragswalze und Gegenwalze) nicht ausreicht, um einen gleichmäßigen Spalt zwischen diesen Walzen bei allen Betriebsbedingungen und -zuständen herzustellen. Beim Betrieb kommt noch der hydrodynamische Druck der Streichmasse hinzu, der im gegenseitigen Spalt der beiden Walzen auf diese einwirkt. Diese Drücke sind ohne weiteres mit den Feldern der Permanentmagnete beherrschbar. Die einzelnenen Polträger 9 können auch mit unterschiedlichen hydraulischen oder pneumatischen Drücken angepresst werden, um einer ungleichmäßigen Biegelinie der Gegenwalze zu entsprechen.

Es empfiehlt sich, den Kernträger 2 aus unmagnetischen Material, z.B. aus austenitischem Stahl herzustellen. Der Polträger 9 sollte in seinem die Permanentmagnete 5 tragenden Teil aus weichmagnetischem Material, z.B. weichmagnetischem Stahl bestehen.

An der Stelle des Gelenks 20 könnte man auch einen axial durchgehenden Druckschlauch vorsehen, wobei dann das Teil 8 ein Stützträger etwa gleichen Querschnitts und Teil 12 eine durchgehende Stützleiste ebenfalls mit gleichem Querschnitt wie dargestellt sein könnte.

Es ist möglich mit nur drei Polträgern 9 natürlich entsprechender Breite auszukommen un dabei eine gesamte magnetische Kraft von 45 kN zu erzeugen, wenn z.B. die Länge des Walzenmantels 19\m beträgt.

Der Walzenmantel 1 ist über Lager 29 an Wellenstümpfen 21 des Kernträgers 2 gelagert. In Fig. 2 sind noch Leitungen 31 und 32 angedeutet, die Druckflüssigkeit oder Druckluft zu den Stellmotoren und zurück leiten.

Der Kernträger 2 weist an seinen Enden Wellenstümpfe 21 auf, mittels deren er über Lager 21 entsprechende Wellenstümpfe 22 des walzenmantels 1 trägt.

Die Leitungen der Hydraulikflüssigkeit, die zu den Stellelementen 8 führen, sind in Fig. 2 mit 31 und 32 angedeutet.

## Patentansprüche

1. Walze mit Biegungsausgleich, bestehend aus einem Walzenmantel (1) und einem inneren, sich axial entlang des Walzenmantels erstreckenden Kernträger (2), wobei der Walzenmantel eine innere, zumindest in Umfangsrichtung durchgehende Schicht (3) aufweist, die radial magnetisiert ist, indem nur Pole einer Art an der Innenfläche der Magnetschicht (3) aus Permanentmagneten (4) vorgesehen sind, und wobei der Kernträger (2) Gegenmagnete (5) aufweist, die axialabschnittsweise angeordnet sind, mit dem Kennzeichen:
a) die Gegenmagnete (5) sind auf dem Kernträger (2) mit ihrer Polung so angeordnet, daß gleichnamige Pole von Gegenmagneten (5) und Walzenmagneten (4) einander gegenüberliegen;
b) die Gegenmagnete (5) befinden sich im Bereich der Hauptbelastungsebene auf nur einer (z.B. der oberen) Seite des Kernträgers (2);
c) die Gegenmagnete (5) sind in ihrer Anzahl zumindest überwiegend parallel zur Richtung der Hauptbelastungsebene beweglich gelagert und durch Stellelemente (8) abgestützt, die an Polträgern (9) der Gegenmagnete (5) angreifen.

2. Walze nach Anspruch 1, dadurch gekennzeichnet, daß die Gegenmagnete (5) Dauermagnete sind, die vorzugsweise als Belag eines oder mehrerer Polträger (9) angeordnet sind, wobei die radiale Außenkontur der Beläge dem Innendurchmesser des Walzenmantels im wesentlchen entspricht.

3. Walze nach Anspruch 1 oder 2, dadurch gekennzeichnet, daß die Polträger (9) durch hydraulische oder pneumatische Stellelemente (8) oder einen Druckschlauch abgestützt sind.

4. Walze nach einem der Ansprüche 1 bis 3, dadurch gekennzeichnet, daß die Stellelemente (8) zur Erzeugung einer Biegelinie des Walzenmantels (1) ungleichmäßig hydraulisch oder pneumatisch ansteuerbar sind.

5. Walzen nach einem der Ansprüche 1 bis 4, dadurch gekennzeichnet, daß der Kernträger (2) aus unmagnetischem, z.B. austenitischem Stahl oder synthetischem Material, vorzugsweise zumindest in seinem aufgrund der Magnetkräfte magnetisch wirksamen Randbereich seines Umfangs bzw. Querschnitts besteht.

6. Walzen nach einem der Ansprüche 1 bis 5, dadurch gekennzeichnet, daß der Spalt zwischen Permanentmagnetschicht (3) der Hohlwalze (1) den Gegenmagneten (5) des Polträgers (9) maximal 2 mm im Arbeitsbereich beträgt.

## Claims

1. Controlled deflection roller, consisting of a roller shell (1) and an inner core support (2) extending axially along the roller shell, wherein the roller shell comprises an inner layer (3) which is continuous at least in the peripheral direction and is radially magnetised in that only poles of one type are provided on the inner surface of the magnetic layer (3) of permanent magnets (4), and wherein the core support (2) comprises counter-magnets (5), which are disposed in axial sections, characterised in that:
a) the counter-magnets (5) are disposed on the core support (2) with their polarity arranged in such a manner that like poles of the counter-magnets (5) and roller magnets (4) are opposite one another;
b) the counter-magnets (5) are located in the vicinity of the main load plane on only one (for example the upper) side of the core support (2);
c) the counter-magnets (5) are all mounted so as to move at least substantially parallel to the direction of the main load plane, and are supported by adjusting elements (8), which act on pole supports (9) of the counter-magnets (5).

2. Roller according to Claim 1, characterised in that the counter-magnets (5) are permanent magnets which are preferably disposed as a covering of one or more pole supports (9), wherein the radial external contour of the covering substantially corresponds to the inner diameter of the roller shell.

3. Roller according to Claim 1 or Claim 2, characterised in that the pole supports (9) are supported by hydraulic or pneumatic adjusting elements (8), or by a pressure hose.

4. Roller according to any one of Claims 1 to 3, characterised in that the adjusting elements (8) for generating a deflection line of the roller shell (1) can be controlled in an irregular manner hydraulically or pneumatically.

5. Roller according to any one of Claims 1 to 4, characterised in that the core support (2) consists, preferably at least in the edge area of its periphery or cross-section which acts magnetically owing to the magnetic forces, of non-magnetic material for example austenitic steel or synthetic material.

6. Rollers according to any one of Claims 1 to 5, characterised in that the gap between the permanent magnet layer (3) of the hollow roller (1) and the counter-magnet (5) of the pole support (9) is 2 mm maximum in the operating area.

## Revendications

1. Cylindre à équilibrage de flexion, comprenant une enveloppe cylindrique de cylindre (1) et un noyau-support (2) intérieur qui s'étend axialement le long de l'enveloppe cylindrique de cylindre, cette dernière comportant une couche intérieure (3) qui est continue au moins suivant la direction circonférentielle et qui est magnétisée radialement, seuls des pôles d'un type étant prévus à la surface intérieure de la couche magnétique (3) au moyen d'aimants permanents (4), tandis que le noyau-support (2) comporte des aimants complémentaires (5) qui sont disposés par sections dans le sens axial, ce cylindre comportant les particularités caractéristiques suivantes :
a) les aimants complémentaires (5) sont disposés, par leurs pôles, sur le noyau-support (2) de façon telle que des pôles de même nom des aimants complémentaires (5) et des amants de cylindre (4) se font face,
b) les aimants complémentaires (5) sont situés dans la zone du plan de sollicitation principale sur une seule face (par exemple la face supérieure) du noyau-support (2) et
c) les aimants complémentaires (5) sont, dans leur totalité, montés d'une manière mobile suivant une direction essentiellement parallèle à la direction du plan de sollicitation principale et sont soutenus par des éléments de réglage (8) qui exercent leur action sur des porte-pôle (9) des aimants complémentaires (5).

2. Cylindre suivant la revendication 1, caractérisé en ce que les aimants complémentaires (5) sont des amants permanents qui sont de préférence disposés sous la forme d'un revêtement d'un ou plusieurs porte-pôle (9), le contour extérieur des revêtements dans le sens radial correspondant pratiquement au diamètre intérieur de l'enveloppe cylindrique de cylindre.

3. Cylindre suivant l'une des revendications 1 et 2, caractérisé en ce que les porte-pôle (9) sont soutenus par des éléments de réglage (8) hydrauliques ou pneumatiques ou par un tuyau souple de pression.

4. Cylindre suivant l'une des revendications 1 à 3, caractérisé en ce que les éléments de réglage (8) sont agencés de façon à pouvoir être commandés hydrauliquement ou pneumatiquement d'une manière non uniforme, en vue de produire une ligne de flexion de l'enveloppe cylindrique de cylindre (1).

5. Cylindre suivant l'un des revendications 1 à 4, caractérisé en ce que le noyau-support (2) est en acier non magnétique, par exemple austénitique, ou en matière synthétique, de préférence au moins dans la zone marginale de son contour périphérique ou de sa section qui est active sur le plan magnétique en raison des forces des aimants.

6. Cylindre suivant l'une des revendications 1 à 5, caractérisé en ce que l'intervalle entre la couche d'aimants permanents (3) du cylindre creux (1) et les aimants complémentaires (5) du porte-pôle (9) est au maximum égal à 2 mm dans la zone de travail.
